# EUROPEAN PATENT APPLICATION

(11) **EP 0 806 141 A1**
(43) Date of publication of application: **12.11.1997**
(21) Application number: 96107169.3
(22) Date of filing: 07.05.1996
(51) Int. Cl.: A01N 37/06, A01N 37/02

(54) **Enhancement of the efficacy of fungicides**

(71) Applicant: AMERICAN CYANAMID COMPANY, Wayne New Jersey 07470 (US)
(72) Inventor: Dehne, Heinz-Wilhelm, Prof. Dr., D-53125 Bonn (DE); Bickers, Udo, D-49835 Witmarschen (DE); Cotter, Van Dr., D-55218 Ingelheim (DE)
(74) Representative: Kompter, Hans-Michael

(57) **Abstract**

Compounds from the group of mono or poly unsaturated fatty acids with 10-24 C-atoms, their C₁₋₄ alkylesters and the C₁₋₄ alkyl esters of saturated C₁₀₋₂₄ fatty acids enhance the efficacy of systemic fungicides; they can be incorporated into formulations of the fungicidal compounds or be added to spray mixtures (tank mix) as separarately formulated additives in order to raise or improve the efficacy of the fungicides.

## Description

This invention concerns the enhancement of the efficacy of various systemic fungicidal compounds by addition of certain longer chain fatty acids and/or their lower alkyl esters, preparations through which this affect can be exploited as well as the combined use of the new additives and the fungicidal compounds in the control of phytopathogenic fungi.

As a rule adjuvants must be used to bring crop protection agents, for example fungicidal compounds, into such a form that the user can apply them either as such or after dilution with water. The right choice of suitable adjuvants and carriers for the information often determines to a significant extent whether the active ingredient can display its full efficacy on application. The necessity to select suitable formulation adjuvant means that not every active ingredient can be processed to any formulation without losses in efficacy having to be taken into account.

The efficacy of the active components can often be improved by addition of other (active) ingredients. The observed efficacy of the combination of ingredients can sometimes be significantly higher than that would be expected from the amounts of the individual ingredients used (synergism).

The usual components of formulations such as carriers and adjuvants (e.g. organic solvants, suspension agents, emulgators, wetting agents, solubilizing agents) which do not themselves possess pesticidal activity, however, do not usually lead to an unexpected increase in efficacy.

In the case of the fungicidal compound dimethomorph, however, EP 520385 describes fungicidally inactive additives by means of which an unexpected enchancement of dimethomorph efficacy could be found in the experiments described.

These additives are alkoxylates of aliphatic alcohols, for example, of aliphatic alcohols with 8 to 20 C-atoms and, on average, 2 - 9 ethylene oxide units per molecule, with a terminal free or alkylated OH group. The enhancement in activity due to the described additives is, however, not always satisfactory. For example, under certain climatic conditions, phytotoxicity is observed.

In the US Patent 4,834,908, preparations ("Crop Oil Concentrates") are suggested or referred to which, as well as certain anionic surfactants containing an acidic group (also as salt) are characterized by their containing a long chain carbonic acid or a lower alkyl ester of the same as well as an aliphatic and/or aromatic hydrocarbon. These preparations are intended as additives to herbicides for post-emergence treatments. The patent does not contain any reference to the use of the preparations in connection with other crop protection agents, in particular not with fungicides.

It has now been found that, surprisingly, the effective amounts of systemic fungicides which must be applied can be lowered considerably with respect to the amounts usually required to achieve the same effect, if these fungicidal compounds or their formulations are applied in combination with certain unsaturated fatty acids and/or their lower alkyl esters and/or the lower alkyl esters of longer chain saturated fatty acids.

Furthermore, the new additives also improve the efficacy profile of the said fungicides in so far as they can be successfully applied, with normal application amounts, against such fungal diseases for the control of which they had previously been less suitable. Yet further, the use of the new additives makes it possible to process the fungicides to or use them as such formulations as had previously been looked upon as less satisfactory, for example the solid formulation of triforine.

The new additives are unsaturated fatty acids with 10 - 24, preferably 12 - 22 and in particular 14 - 20 C-atoms with 1 - 5 double bonds and/or C₁₋₄ alkyl esters of the said unsaturated fatty acids or of saturated fatty acids with the same number of C-atoms. The aliphatic moieties of the said acids and esters may be straight or branched. Of particular interest are those unsaturated fatty acids, which are liquids at temperatures below 20°C such as linoleic acid, linolenic acid, arachidonic acid and oleic acid and their respective methyl, ethyl and propyl esters and of the esters of saturated fatty acids, mainly the methyl, ethyl and propyl esters of C₁₄₋₂₂ carbonic acids. One or several of the acids and/or esters together can be used according to the invention. Linoleic acid (including technical material) has been proved to be especially advantageous.

The enhancement in efficacy by addition of the said fatty acids and/or esters can, in particular, be observed for the fungicidal compounds dimethomorph, triforine, metalaxyl, cymoxanil, tebuconazol and triadimenol. Most preferred is the combined use of dimethomorph or triforine and linoleic acid.
The fatty acids and fatty acid esters which are usable according to the invention can be included in the formulation or also added in a suitable form with the preparation of the spray mix (tank mix). In this latter case, they are added preferably as a separate preparation in a mixture with a disperging agent and, where desirable, with further adjuvants so as to ensure that they are as evenly distributed as possible in the spray mix.

It is expedient to add an antioxidant to preparations containing unsaturated fatty acids or their esters so as to improve the storage stability.

The fungicidal compounds can be applied as normal commercial formulations with which the fatty acids and esters according to the invention, and where desirable, additional adjuvants such as antioxidants and emulgators, are mixed in. New formulations containing the fatty acids and esters can also be prepared.

Alkylphenoloxethylates, alkyloxyalkylates (alkyloxyethylates) preferably ethopropoxylated tristyrylphenol are suitable emulgators or surfactants. Suitable products are available commercially, for example the SOPROPHOR product line. Under suitable conditions, alkoxylates in accordance with EP 520585 can also be used.

The appropriate relative amounts of active ingredient and unsaturated fatty acids lie, in accordance with the invention, between 5:1 and 1:100, preferably between 2:1 and 1:50 and, in particular, between 1:1 and 1:10. In general and within certain limits, the fungicidal efficacy can be enhanced to a higher degree by the addition of larger amounts of the fatty acids and/or esters as is shown in the experimental results described below.
The amounts of surfactants which, according to the invention, can be used in the formulations can be varied within a broad range. This lies in general between 2 and 20 percent by weight of the active ingredient-containing formulation and can rise to 60 percent by weight when the additives in accordance with the invention are formulated separately, for example, with the alkoxylates according to EP 520585 and adjuvants. In general, however, 2 to 30, preferably 3 to 20 percent by weight of surfactants are used for the separate formulations of the fatty acids and esters.

Recommended doses for various applications are known for those fungicidal substances where the efficacy can be enhanced in accordance with the invention. Addition of the fatty acids and/or esters suggested here can (depending on the active ingredient, the fatty acids and/or ester and their amounts) reduce the amount of active ingredient per hectare required in these recommendations by half or more. By using somewhat higher application doses, it is possible to treat other fungal diseases for the control of which, the said fungicides without the new additives would not be suitable.

An important advantage is the rapid onset of activity on use of the new additives. This enlarges the period for application of the fungicide and makes its use more variable.
The fungicides mentioned above can be used in combination with the new additives prophylactically and curatively.

The fatty acids and/or esters according to the invention, the fungicidal compounds and usual adjuvants and carriers can be processed to the preferably fluid or dispersible solid formulations known in the art, for example, solutions, emulsions, WPs (wettable powders), suspension concentrates, emulsion concentrates, low volume or ultra low volume preparations and granulates.

As well as fluid and/or solid carriers or solubilising agents such as organic solvents like ketones, alcohols, fluid aliphatic, araliphatic or aromatic compounds, fine natural or synthetic silicates or carbonates, the preparations usually contain ionic and/or non-ionic surfactants which function as emulgators, disperging agents or wetting agents. Antifoam, antioxidant and antifreeze agents may be added. Suitable adjuvant and carrier substances are described in the literature and well known to the persons skilled in the art.

### Examples of formulations according to the invention:

### 1. Dimethomorph DC

| | |
|---|---|
| dimethomorph | 75g |
| linoleic acid | 75g |
| di-tert.-butylhydroxytoluene | 10g |
| SOPROPHOR FL | 150g |
| benzyl alkcohol | ad 1000ml |

### 2. Triforine EC

| | |
|---|---|
| triforine (100% TM) | 100g |
| linoleic acid | 100g |
| di-tert.-butylhydroxytoluene | 10g |
| dodecylbenzenesulfonic acid | 206g |
| triethylamine | 64g |
| isooctadecylalcohol | 20g |
| Luviskol VA 55 l | 20g |
| N-methylpyrrolidone | 256g |
| dimethylformamide | ad 1000ml |

The formulation described above is mixed for use with water to give a spray mix with the desired concentration of active ingredient.

If the fatty acids and/or esters according to the invention are to be formulated separately (as additive for a tank mix) this can be carried out as in the following example:

### Linoleic acid for tank mix

| | |
|---|---|
| linoleic acid | 100g |
| di-tert.-butylhydroxytoluene | 10g |
| Emcol 4210 | 100g |
| solvent naphta | ad 1000ml |

It is also an object of the invention to suggest a method for the control of phytopathogenic fungi, characterized by the use of systemic fungicidal compounds, in particular, dimethomorph, triforine and metalaxyl in combination with one or more compounds selected from the group comprising mono or poly unsaturated fatty acids with 10-24 C-atoms, their C₁₋₄ alkyl esters and the C₁₋₄ alkyl esters of saturated C₁₀₋₂₄ fatty acids.

The above descriptions and examples as well as the following tests are to make the principle of the invention clear to the expert. The invention should not be deemed limited to these specific details. On the contrary, modifications to the invention obvious to the person skilled in the art but not specifically described shall be included in the scope of the invention.

The test results described below demonstrate the enhancement in efficacy of various fungicidal substances by addition of certain fatty acids and esters.

### Biological Investigations

### A Spray treatment

Spray mixtures to which (with the exception of comparative tests) 500 ppm linoleic acid had been added were sprayed to just before run off onto the upper side of the leaves of various plant species. Forty eight hours after the treatment, the plants were inoculated with a fungal spore suspension (80,000 spores/ml) and incubated for 24 hrs at 22°C and 98% relative humidity.

Cucumbers and apples were inoculated with dry spores of *Sphaerotheca fuligenea or Podosphaera leucotricha* respectively. The infection was determined as % leaf area infected in comparison with the control.
1. *Plasmopara viticola* on Vines (Müller-Thurgau) (Infection in % leave area/active ingredient dose in ppm)

| active ingredient | without linoleic acid | | | with 500ppm linoleic acid | | |
|---|---|---|---|---|---|---|
| | 2,5ppm | 10ppm | 25ppm | 2,5ppm | 10ppm | 25ppm |
| dimethomorph | 76 | 61 | 18 | 39 | 3 | 0 |
| cymoxanil | 83 | 65 | 30 | 79 | 32 | 6 |
| ----- (control) | 100 | 100 | 100 | 100 | 100 | 100 |

2. *Phytophthora infestans* on Tomatoes (Rheinlands Ruhm) (Infection in % leave area/active ingredient dose in ppm)

| active ingredient | without linoleic ester | | | with 500ppm linoleic ester | | |
|---|---|---|---|---|---|---|
| | 2,5ppm | 10ppm | 25ppm | 2,5ppm | 10ppm | 25ppm |
| dimethomorph | 92 | 66 | 29 | 66 | 7 | 2 |
| cymoxanil | 96 | 83 | 43 | 79 | 51 | 15 |
| ----- (control) | 100 | 100 | 100 | 100 | 100 | 100 |

3. *Sphaerotheca fuliginea* on Cucumbers (Hoffmanns Producta) (Infection in % leave area/active ingredient dose in ppm)

| active ingredient | without linoleic acid | | | with 500ppm linoleic acid | | |
|---|---|---|---|---|---|---|
| | 5ppm | 10ppm | 20ppm | 5ppm | 10ppm | 20ppm |
| triforine | 96 | 82 | 66 | 95 | 59 | 33 |
| ----- (control) | 100 | 100 | 100 | 100 | 100 | 100 |

4. Podosphaera leucitricha on Apples (Golden Delicious) (Infection in % leave area/active ingredient dose in ppm)

| active ingredient | without linoleic acid | | | with 500ppm linoleic acid | | |
|---|---|---|---|---|---|---|
| | 2,5ppm | 10ppm | 25ppm | 2,5ppm | 10ppm | 25ppm |
| dimethomorph | 76 | 61 | 18 | 39 | 3 | 0 |
| cymoxanil | 83 | 65 | 30 | 79 | 32 | 6 |
| ----- (control) | 100 | 100 | 100 | 100 | 100 | 100 |

5. Treatment of potato late blight
Curative activity of dimethomorph applied at different doses (g of a.i./ha) together with 1000g/ha of isopropylmyristate (a) or 1000g/ha of linoleic acid (b) plus emulsifier as additives. The plants were sprayed 2 days after inoculation. Percent infected leaf areas of plants 5 days after inoculation were as follows:

| Additive | dimethomorph dose (g a. i./ha) | | | | | |
|---|---|---|---|---|---|---|
| | 0 | 3.3 | 10 | 30 | 90 | 270 |
| -----(control) | 100 | 99 | 98 | 88 | 84 | 77 |
| (a) | 100 | 100 | 98 | 75 | 59 | 52 |
| (b) | 99 | 92 | 67 | 31 | 18 | 13 |

The following table shows the curative activity of various dimethomorph doses (g a.i./ha) in combination with different doses (g/ha) of linoleic acid. Plants were sprayed 2 days after inoculation. Percent of infected leaf areas of the plants 6 days after inoculation were as follows:

| dose (g/ha) linoleic acid | dimethomorph dose (g a. i./ha) | |
|---|---|---|
| | 0 | 270 |
| ------ | 71 | 46 |
| 100 | --- | 35 |
| 300 | --- | 27 |
| 1000 | 68 | 15 |

6. Effect of 200ppm a.i. of triforine in combination with 1000ppm of isopropyl myristate or 1000ppm of linoleic acid against cucumber powdery mildew. The compounds were applied in a small band on the leaves, two days after inoculation.
Percent of infected leaf areas of the plants at 6 days after inoculation were as follows:

| additive | without triforine | with triforine |
|---|---|---|
| isopropyl myristate | 100 | 61 |
| linoleic acid | 100 | 49 |
| ----- | 100 | 84 |

### B Systemic test

One drop containing 15 or 45 µg active ingredient was applied to the base on the upper side of either grape or bean leaves. Linoleic acid had been added to the active ingredient at a 1:1 proportion (except in comparative experiments). The leaves were inoculated with a spore suspension (80,000 spores/ml) forty eight hours after the treatment and incubated for 24 hrs at 22°C or 98% relative humidity. Infection was determined as % infected leaf area in comparison to the control.
1. *Plasmopara viticola* on Vines (Müller-Thurgau) (Infection in % leaf area)

| active ingredient | without linoleic acid | | | with linoleic acid | | |
|---|---|---|---|---|---|---|
| | | | | 15µg | 45µg | |
| | 15µg | 45µg | | 15µg | 45µg | |
| dimethomorph | 83 | 68 | | 43 | 6 | |
| cymoxanil | 88 | 70 | | 52 | 18 | |
| metalaxyl | 70 | 49 | | 39 | 10 | |
| ----- (control) | 100 | 100 | | 100 | 100 | |

2. *Uromyces phaseoli* on Beans (Saxa) (Infection in % leave area/active ingredient dose in µg)

| active ingredient | without linoleic acid | | | with linoleic acid | | |
|---|---|---|---|---|---|---|
| | | | | 15µg | 45µg | |
| | 15µg | 45µg | | 15µg | 45µg | |
| triforine | 80 | 64 | | 45 | 16 | |
| tebuconazol | 64 | 33 | | 51 | 11 | |
| triadimenol | 66 | 24 | | 55 | 11 | |
| ----- (control) | 100 | 100 | | 100 | 100 | |

The following experiments were carried out as with exoeriments 1 and 2 above but with differences in the amounts of active ingredients and additives:
3. Effect of various unsaturated fatty acids together with triforine (45 µg fatty acid and 45 µg triforine)
Systemic test against *Uromyces phaseoli* on Beans (Saxa) Infection in percent leaf area.

| fatty acid | triforine | infection |
|---|---|---|
| ----- | 45µg | 79 |
| linoleic acid (45µg] | 45µg | 21 |
| arachidonic acid (45µg) | 45µg | 26 |
| control | ----- | 100 |

4. As 3 but with dimethomorph (45µg fatty acid and 45 µg dimethomorph)
Systemic test against Plasmopara viticola on Vines (Müller-Thurgau) Infection in percent leaf area.

| fatty acid | dimethomorph | infection |
|---|---|---|
| ----- | 45µg | 70 |
| linoleic acid (45µg) | 45µg | 10 |
| arachidonic acid (45µg) | 45µg | 17 |
| control | ----- | 100 |

5. Dose-dependence of the effect of linoleic acid exemplified as effect of triforine against *Uromyces phaseoli* on Beans (Saxa). Systemic test. Infection in percent leaf area.

| linoleic acid | triforine | infection |
|---|---|---|
| ----- | 45µg | 71 |
| 15µg | 45µg | 26 |
| 45µg | 45µg | 20 |
| 90µg | 45µg | 12 |
| control | --- | 100 |

6. Dose-dependence of the effect of linoleic acid exemplified as effect of dimethomorph against *Plasmopara viticola* on Vines (Müller-Thurgau). Systemic test. Infection in percent leaf area.

| linoleic acid | dimethomorph | infection |
|---|---|---|
| ----- | 45µg | 74 |
| 15µg | 45µg | 31 |
| 45µg | 45µg | 17 |
| 90µg | 45µg | 8 |
| control | --- | 100 |

## Claims

1. The use of mono or polyunsaturated fatty acids with 10 - 24 C-atoms and/ or their C₁₋₄ alkyl esters and/or the C₁₋₄ alkyl esters of saturated C₁₀₋₂₄ carbonic acids to enhance the activity of systemic fungicides.

2. Use in accordance with claim 1 wherein said fatty acids contain 12 - 22, preferably 16 - 20 C-atoms and the unsaturated fatty acids contain 1-5, preferably 2 to 4 double bonds.

3. Use in accordance with claim 1 wherein said unsaturated fatty acids are selected from the group comprising linoleic acid, linolenic acid, arachidonic acid and oleic acid.

4. Use in accordance with claims 1 to 3 wherein the ratio of fungicidal ingredient to said fatty acids and/or esters is between 5:1 and 100:1, preferably between 2:1 and 1:50 and in particular between 1:1 and 1:10.

5. Use in accordance with one of the above claims, wherein the fatty acids/fatty acid esters are incorporated into fungicide formulation consisting of a systemic fungicidal compound, adjuvant and carrier substances.

6. Use in accordance with claims 1 to 4 wherein the fatty acids/fatty acid esters or their formulations are added only when preparing the spray mixture (tank mix).

7. Fungicidal formulations with systemic fungicidal components, adjuvants an/or carrier substances characterized by their containing, in addition to the usual adjuvants and carriers, one or more compounds from the group of mono or poly unsaturated fatty acids with 10-24 C-atoms, their C₁₋₄ alkyl esters and the C₁₋₄ alkylesters of C₁₀₋₂₄ fatty acids and, where appropriate one or more antioxidants.

8. Formulations according to claim 7 wherein the fungicidal compound is dimethomorph, triforine or metalaxyl and the fatty acid linoleic acid, linolenic acid, arachidonic acid or oleic acid or a C₁₋₃ alkyl ester of these acids or of a saturated C₁₄₋₁₈ fatty acid.

9. Formulations according to claim 8 characterized by the relative proportion of active ingredient/unsaturated fatty acid being 5:1 to 1:100, preferably 2:1 to 1:50 and in particular 1:1 to 1:10

10. Mixtures to enhance the efficacy of systemic fungicides characterized by their containing one or more compounds from the group of mono or poly unsaturated fatty acids with 10-24 C-atoms, their C₁₋₄ alkylesters and the C₁₋₄ alkyl esters of saturated C₁₀₋₂₄ carbonic acids and one or more surfactants as emulgators or dispersion agents and, where appropriate organic solvents.

11. The use of one or more compound selected from the group of mono or poly unsaturated fatty acids with 10-24 C-atoms, their C₁₋₄ alkylesters and the C₁₋₄ alkyl esters of saturated C₁₀₋₂₄ fatty acids in the production of formulations of systemic fungicides.

12. The use of one or more compounds selected from the group of mono or poly unsaturated fatty acids with 10-24 C-atoms, their C₁₋₄ alkylesters and the C₁₋₄ alkyl esters of saturated C₁₀₋₂₄ fatty acids in the production of additives for enhancing the efficacy of systemic fungicides.

13. Method for the control of phytopathogenic fungi characterized by the use of an effective amount of a systemic fungicidal compound, in particular dimethomorph, triforine and metalaxyl, in combination with mono or poly unsaturated fatty acids with 10-24 C-atoms, their C₁₋₄ alkyl esters and/or the C₁₋₄ alkyl esters of saturated C₁₀₋₂₄ fatty acids.
